# EUROPEAN PATENT SPECIFICATION

(11) **EP 1 510 310 B1**
(45) Date of publication and mention of the grant of the patent: **04.03.2009**
(21) Application number: 04255122.6
(22) Date of filing: 25.08.2004
(51) Int. Cl.: B28B 1/00, B29C 67/00

(54) **Method for fabricating solid freeform objects**
Verfahren zur Herstelliung von einem "Solid Free Form" Gegenstand
Procédé pour la fabrication de formes libres solides

(30) Priority: 27.08.2003 US 650571
(43) Date of publication of application: 02.03.2005
(73) Proprietor: HEWLETT-PACKARD DEVELOPMENT COMPANY, L.P., Houston, TX 77070 (US)
(72) Inventor: Oriakhi, Christopher, Corvallis, OR 97333 (US); Lambright, Terry M., Corvallis, OR 97330 (US); Farr, Isaac, Corvallis, OR 97333 (US)
(74) Representative: Jackson, Richard Eric

(56) References cited:
- US-A1- 2002 026 982
- US-B1- 6 217 816

## Description

### FIELD OF THE INVENTION

The present invention is drawn to a method for free-form fabrication of three-dimensional objects created from inorganic phosphate cements. These products can be prepared using an ink-jettable aqueous liquid for hydrating a particulate blend to form a layered cement composition.

### BACKGROUND OF THE INVENTION

The efficient production of prototype or other three-dimensional objects can provide an effective means of reducing the time it takes to bring a product to market at a reasonable cost. A typical approach for preparing prototypes has required specific tooling, e.g., molds and dies, for the prototype, which can be a slow and cumbersome process.

Recently, computerized modeling has alleviated some of the need for building prototypes. Computer modeling can be carried out quickly, and provide a good idea of what a product will look like, without a specialized tooling requirement. However, the fabrication of a tangible object is still often preferred for prototyping. The merging of computer modeling and the physical formation of three-dimensional objects is sometimes referred to as desktop manufacturing. Various techniques that employ desktop manufacturing have been explored and described in the literature.

In this evolving area of technology, there has been a desire to provide new methods of manufacture that are relatively easy to employ, provide rigid structures, and are relatively quick in the formation of such three-dimensional objects. Thus, additional methods, systems, and/or compositions that meet these criteria would be an advancement in the art.

### SUMMARY OF THE INVENTION

It has been recognised that certain methods can be used for free-form fabrication of three-dimensional objects. Specifically, a method for solid-free form fabrication of a three-dimensional object can comprise steps of a) depositing a particulate composition including inorganic phosphate particulates in a defined region; b) ink-jetting an aqueous liquid onto a predetermined area of the particulate composition to form hydrated cement in the predetermined area; c) hardening the hydrated cement; and d) repeating steps a) through c) such that multiple layers of the cement are formed that are bound to one another, thereby forming the three dimensional object. US-A-621 7816 and US 2002/026982 describe fabricating solid three-dimensional objects.

Additional features and advantages of the invention will be apparent from the detailed description that follows, which illustrates, by way of example, features of the invention.

### DETAILED DESCRIPTION OF THE PREFERRED EMBODIMENT(S)

It is to be understood that the terminology used herein is used for the purpose of describing particular embodiments only. The terms are not intended to be limiting because the scope of the present invention is intended to be limited only by the appended claims and equivalents thereof.

It must be noted that, as used in this specification and the appended claims, the singular forms "a," "an," and "the" include plural referents unless the context clearly dictates otherwise.

Concentrations, amounts, molecular sizes, and other numerical data may be expressed or presented herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1 wt% to about 5 wt%" should be interpreted to include not only the explicitly recited concentration of about 0.1 wt% to about 5 wt%, but also include individual concentrations and the sub-ranges within the indicated range. Thus, included in this numerical range are individual concentrations such as 1 wt%, 2 wt%, 3 wt%, and 4 wt%, and sub-ranges such as from 0.1 wt% to 1.5 wt%, 1 wt% to 3 wt%, from 2 wt% to 4 wt%, from 3 wt% to 5 wt%, etc. This same principle applies to ranges reciting only one numerical value. For example, a range recited as "less than about 5 wt%" should be interpreted to include all values and sub-ranges between 0 wt% and 5 wt%. Furthermore, such an interpretation should apply regardless of the breadth of the range or the characteristics being described.

As used herein, "aqueous liquid" refers to the liquid fluid that can be prepared for jetting from ink-jet architecture. Components that can be present in an aqueous liquid are well known in the ink-jet arts, and a wide variety of such components can be used with the systems and methods of the present invention. Though water is all that is required to be present to qualify as an aqueous liquid, other components can be present to improve jettability properties, build properties (such as object strength and reduced shrinkage after drying), hardening properties (such as hardening accelerators), and the like. Example of such added components include a variety of different agents, including surfactants, organic solvents and co-solvents, buffers, biocides, sequestering agents, viscosity modifiers, low molecular weight polymers, lithium ion sources, etc. Colorant can optionally be added to the aqueous liquid as well.

The use of the term "cement," in accordance with embodiments of the present invention, is intended to include hydrated particulate compositions that predominantly contain inorganic phosphates. The cement can be in a wet state, or in a more hardened or cured state.

The term "dry cement mix" is used to describe dry particulate compositions that can be hydrated to form cement.

The term "particulate" includes fine dry powders and/or crystals.

The term "colorant" includes both pigments and dyes.

The term "shrinkage minimizing agent" refers to compositions that can be included in aqueous liquids, in accordance with embodiments of the present invention, which reduce the effects of size or shape altering that can occur as cement dries or cures.

The terms "harden" or "hardening" includes a state of cement setting from the beginning stages of setting to a completely hardened or cured state.

When referring to a "predetermined area," the layering of cement composition to form a three-dimensional object permits the predetermined area to vary from layer to layer. For example, a predetermined area that is used in the formation of a layer of cement can be redefined upon application of subsequent layers, depending on the shape to be formed in accordance with systems and methods of the present invention. In other words, as each layer of formed cement is typically of a slightly different shape, by definition, the predetermined area will be different within a defined region.

With these definitions in mind, a method for solid free-form fabrication of a three-dimensional object can comprise steps of a) depositing a particulate composition including inorganic phosphate particulates in a defined region; b) ink-jetting an aqueous liquid onto a predetermined area of the particulate composition to form hydrated cement in the predetermined area; c) hardening the hydrated cement; and d) repeating steps a) through c) such that multiple layers of the cement are formed that are bound to one another, thereby forming the three dimensional object according to claim 1. In one embodiment, a further step of removing a portion of the particulate composition that does not form the hydrated cement can be carried out. This step can occur after every layer is formed, or can occur periodically after multiple layers are formed, or can occur at the end of the process.

In accordance with embodiments of the present invention, generally, three-dimensional printing techniques that employ a layered printing process are provided. These methods typically involve the spreading of a thin layer of a particulate composition into a build bin, followed by microdispensing an aqueous liquid with a drop-on-demand printhead to react with or cause a layer of the particulates of the particulate composition to react. This process can then be repeated over and over, lowering the build bin with respect to the ink-jet architecture after printing on each layer, or raising the ink-jet architecture with respect to the build bin after printing on each layer, until a three-dimensional object is formed. Typically, the fabricated object can be retrieved by removing the unbound particulate and extracting the part. The particulate composition provides the majority of the bulk of the formed object, and the aqueous liquid is used to bind and define the shape of the fabricated object.

### Particulate Composition

With respect to the methods, described herein, various embodiments in accordance with the present invention can be practiced. For example, inorganic phosphate particulates can be present in the particulate composition at from 20 wt% to 100 wt%. Additionally, the inorganic phosphate particulates can have an average particulate size from 10 microns to 100 microns. In one embodiment, the particulate composition, which includes at least one type of inorganic phosphate particulate, can utilize one or more calcium phosphate compounds. Examples include monocalcium phosphate, dicalcium phosphate, tricalcium phosphate, tetracalcium phosphate, or hydroxyapatite. Other phosphates including magnesium phosphate, strontium phosphate, barium phosphate, or alkali metal phosphates can alternatively or additionally be used in various formulations as well. Addition of one or more of these alternative phosphates (particularly strontium and barium) can enable detection or tracking by radiographic means.

As certain embodiments can utilize less than 100 wt% of inorganic phosphate particulates, other particulate components can also be present in the particulate composition, such as ordinary Portland dry cement mix, ferrite dry cement mix, sulfoferrite, sulfoaluminoferrite, nanofillers, plasticizers, crosslinking agents, polymers, and drying and setting accelerators. For example, in one embodiment, polymeric particulates can also be present in the particulate composition. Examples of such polymeric particulates include 75% to 100% hydrolyzed polyvinyl alcohol powder, polyacrylamide powder, poly(acrylic acid), poly(acrylamide-co-acrylic acid), poly(vinyl alcohol-co-ethylene), poly(vinyl alcohol-co-vinyl acetate-co-itaconic acid), poly(vinyl pyrrolidone), poly(methylmethacrylate-co-methacrylic acid), soluble starch, methylcellulose, and combinations thereof. The weight average molecular weight of such polymeric particulates can be from 2,000 Mw to 1,000,000 Mw. In a more detailed aspect, the polymeric particulates can be from 2,000 Mw to 150,000 Mw. The polymeric particulates can have an average particulate size from 5 microns to 80 microns. The use of the polymeric particulates can provide for crosslinking or other reactions within the particulate composition upon application of the aqueous liquid, thereby improving hardening and strength-building of the three-dimensional object.

Further, nanocomposites can also be present in particulate composition that makes up the dry cement mix, though such compositions are not typically involved in the primary reaction that forms the cement. Additionally, the particulate composition can include precursors that form organic polymers, which can be generated by the controlled hydrolysis of an inorganic phase of the particulate composition in the presence of acidic, neutral, or anionic vinyl and condensation polymers. The particulate composition phase can also contain other additives to enhance setting time, compression strength, and surface finish.

### Aqueous Liquid Composition

With respect to the aqueous liquid that can be jetted to hydrate and harden the particulate composition layer by layer, many different formulations can be used. For example, an aqueous liquid can be prepared that is predominantly water. To the water can be added surfactants, organic solvents and co-solvents, buffers, biocides, sequestering agents, viscosity modifiers, low molecular weight polymers, lithium ion sources, etc. Colorant can optionally be added to the aqueous liquid as well.

In one embodiment, the aqueous liquid can include a low molecular weight polymer having a weight average molecular weight from 200 Mw to 2000 Mw. Such polymers can provide binding properties when jetted on the particulate composition, thereby adding strength to the finished object. Lower molecular weight polymers can be used in the aqueous liquid due to jettability considerations, as is generally known in the ink-jet arts. More specifically, polymers that can be present in the aqueous liquid include 200 Mw to 2000 Mw polyethylene glycol and/or poly(vinyl alcohol-co-acetate) copolymer, for example.

The aqueous liquid can also include a shrinkage minimizing agent. These agents can include organic co-solvents that minimize reduction in size and/or shape upon drying of the cement. Exemplary shrinkage minimizing agents include 2,5-dimethylpropanediol and/or pentaerythriol.

Other components can be present in the aqueous liquid, such as those commonly used in ink-jet ink formulations. For example, the aqueous liquid can also include a colorant, such as a pigment and/or a dye to provide color to one or more layer of the solid three-dimensional object.

A typical aqueous liquid formulation that can be used with the present invention can include one or more organic solvent or co-solvents, present in total at from 5.0% to 50.0% by weight, and one or more non-ionic, cationic, and/or anionic surfactant, present from 0.01% to 10.0% by weight. The balance of the formulation can be purified water, or other vehicle components known in the art such as biocides, viscosity modifiers, pH adjustment materials, sequestering agents, preservatives, and the like.

Classes of organic solvents or co-solvents that can be used can include aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs of polyethylene glycol alkyl ethers, N-alkyl caprolactams, unsubstituted caprolactams, both substituted and unsubstituted formamides, both substituted and unsubstituted acetamides, and the like. Specific examples of solvents that can be used include trimethylolpropane, 2-pyrrolidinone, and 1,5-pentanediol.

One or more of many surfactants can also be used as are known by those skilled in the art of ink formulation and may be alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like.

Consistent with the formulation of this invention, various other additives can be used to optimize the properties of the composition for specific applications. Examples of these additives are those added to inhibit the growth of harmful microorganisms. These additives may be biocides, fungicides, and other microbial agents, which are routinely used in ink-jettable formulations. Examples of suitable microbial agents include, but are not limited to, Nuosept (Nudex, Inc.), Ucarcide (Union carbide Corp.), Vancide (R.T. Vanderbilt Co.), Proxel (ICI America), and combinations thereof. Sequestering agents such as EDTA (ethylene diamine tetra acetic acid) may be included to eliminate the deleterious effects of heavy metal impurities, and buffer solutions can be used to control the pH of the aqueous liquid. From 0.01 % to 2.0% by weight, for example, can be used. Viscosity modifiers and buffers may also be present, as well as other additives known to those skilled in the art to modify properties of the aqueous liquid as desired. Such additives can be present at from 0.01% to 20% by weight.

### Cement Formation

In accordance with embodiments of the present invention, the use of the inorganic phosphate particulates and optional other additives as described herein can form a dry cement mix that, when hydrated with an ink-jettable aqueous liquid in multiple layers, can form an advanced composite material that is substantially devoid of macropore defects or large flaws. This property can provide a finished cement layered object that possesses good mechanical, physical, and chemical properties. Additionally, the presence of a polymeric material in the cement can also improve the properties of the cement. For example, a polymer can be present in the particulate composition and/or the aqueous liquid. If present, the polymer can act to fill pores that may otherwise exist between cement particles. Alternatively or additionally, such polymers can also be used as a lubricant. This can enhance the close packing of the cement particles (hence low porosity), and react, such as through cross-linking, with the layered cement hydration product. If such a polymer is present, during the formation of the cement hydration products, the polymer and/or other optional additives, can be trapped in the matrix, thereby providing desired characteristics.

In an exemplary preparatory embodiment, the aqueous liquid can be housed by an ink-jet architecture configured for ink-jetting the aqueous liquid onto the particulate blend. A substrate can also be present that is configured for carrying the particulate blend in a defined region, such as in a build bin. The defined region can be configured with respect to the ink-jet pen such that the aqueous liquid, upon being ink-jetted from the ink-jet pen, contacts a layer of the particulate blend. In a more detailed embodiment, the system can be configured for applying multiple cement layers in succession that bind successively to one another to form a three-dimensional object. Layers can be applied sequentially by raising the position of the ink-jet architecture with respect to the substrate, and/or by lowering the position of the substrate with respect to the ink-jet architecture.

In a more detailed aspect, the aqueous liquid composition, which can act as a binder phase, can be of a specialty low pH or high pH ink-jet binder optimized for phosphate cement formation. The setting chemistry of the cement can be governed by dissolution and re-precipitation reactions. Depending on the additives used, part of the setting process can include an acid-base reaction. Alternatively, the aqueous liquid can be pH balanced to a more neutral pH, such as from 6 to 8.

At least two primary reaction mechanisms can be carried out in accordance with embodiments of the present invention. In one embodiment, hydrolysis of one or more phosphate particulate variant, such as calcium phosphate (mono, di, tri, etc.), can be reacted with an aqueous liquid that is predominantly water. This reaction mechanism is sufficient to form fast-setting cement. In another embodiment, one or more phosphate variants, such as calcium phosphate (mono, di, tri, etc.), can be reacted with an aqueous liquid that contains a binder material, such as polymers and other additives. If polymers are included in the aqueous liquid phase, this can facilitate a more rapid dissolution and provide for rapid cement setting. Alternatively, a combination of both of these embodiments can be carried out. As mentioned, to provide improved mechanical properties, it may be desirable to blend in powders of high-molecular-weight water-soluble polymers, such as cationic polymers, anionic polymers, or acid polymers or copolymers; nanocomposite fillers; or other additives.

Examples of reaction schemes wherein calcium phosphates are reacted to form hydrated cements in accordance with embodiments of the present invention are provided in Formulas 1 to 4 below:

2CaHPO₄·2H₂O+2Ca₄(PO₄)₂O→Ca₁₀(PO₄)₆(OH)₂+4H₂O **Formula 1**

2CaHPO₄+2Ca₄(PO₄)₂O→Ca₁₀(PO₄)₆(OH) **Formula 2**

10CaHPO₄+2H₂O→Ca₁₀(PO₄)₆(OH)₂+4H₃PO₄ **Formula 3**

3Ca₄(PO₄)₂O+3H₂O→Ca₁₀(PO₄)₆(OH)₂+2Ca(OH)₂ **Formula 4**

In the above reaction schemes, various calcium phosphates of different basicity are shown as being usable. Though only a few calcium phosphate species are shown, the calcium phosphate can be calcium monophosphate, calcium diphosphate, calcium triphosphate, and tetracalcium phosphate, for example. Additionally, in the embodiments shown, the aqueous liquid can be primarily water, but can also include other additives, such as an acid, a base, or low molecular weight polymers, for example. The resulting product in Formulas 1 to 4 includes a hydroxyapatite, but can be a modification thereof, depending in part on the additives used with the aqueous liquid or particulate composition. In the embodiments shown, the chemistry is dominated by dissolution and reprecipitation reactions, and the hydroxyapatite phase formation controls the setting and hardening of the cement. The reactions between calcium phosphate dihydrate and tetracalcium phosphate illustrate cement formation in one embodiment, as shown in Formula 1. Similarly, Formula 2 depicts a reaction between calcium phosphate and tetracalcium phosphate. In Formulas 3 and 4, reactions can be carried out with water to form hyroxyapatite products, and such hydrolysis can result in various byproducts, as shown, which include an acid (in the case of calcium phosphate) or a base (in the case of tetracalcium phosphate). Depending on whether an acid or base is formed, the effect of a drop or elevation of the ambient pH can result. In these embodiments, it can be desirable to compensate for the pH change by altering the formulation of the particulate composition or the aqueous liquid composition appropriately.

The formation of a fast-setting cement is typically a result of a pairing of reactant phosphate variants, binder chemistry (with selected pH), and proper selection of optional additives. Thus, some materials described herein can be provided in a formulation to shorten the setting time and/or improve the compression strength of three-dimensional objects to be formed. Such components, though desirable, are not strictly required. As described previously, additives that can be used include setting accelerators, nanocomposite fillers, crosslinking agents, complexing agents, and/or polymer network formers. As such, various embodiments in accordance with the present invention can be practiced. For example, reaction time, setting time, and/or curing time can be increased by adjusting the pH to either a relatively high pH, e.g., above 9, or to a relatively low pH, e.g., below 4. For example, the reaction rate can be brought to within a range from about 1 to 30 minutes by appropriately choosing optional additives for use, depending on other conditions and ingredients. To illustrate this principle, the aqueous liquid could be a liquid that merely includes water, a pH buffer, and binder polymers. Such polymers can be added to the aqueous liquid, either in addition to those present in the particulate composition or instead of including polymer content in the particulate composition. Including polymers in the aqueous liquid can facilitate a more rapid dissolution rate, and can provide for more rapid setting compared to embodiments where polymeric content is only included in the particulate composition.

### EXAMPLES

The following examples illustrate the embodiments of the invention that are presently best known. However, it is to be understood that the following are only exemplary or illustrative of the application of the principles of the present invention. Thus, while the present invention has been described above with particularity, the following Examples provide further detail in connection with what are presently deemed to be the most practical and preferred embodiments of the invention.

### Example 1

Several particulate compositions were prepared in accordance with embodiments of the present invention. Each particulate composition prepared included a predominant amount of inorganic phosphate particulates and a smaller amount of particulate polymeric content, as well as other optional ingredients. In each case, the particulate compositions were homogenously mixed, and each composition is shown below in Table 1:

**Table 1**

| **Formula** | **Ingredients** | **Wt %** |
|---|---|---|
| 1 | Tetracalcium phosphate | 70 |
| | Citric acid | 8 |
| | Polyacrylic acid; 60,000 MW | 10 |
| | Lithium phosphate | 7 |
| | Hydroxyapatite | 3 |
| | Magnesium fluoride | 2 |
| 2 | Tetracalcium phosphate | 80 |
| | Citric acid | 5 |
| | Polyacrylic acid; 60,000 MW | 3 |
| | Lithium phosphate | 7 |
| | Hydroxyapatite | 3 |
| | Magnesium fluoride | 2 |
| 3 | Tetracalcium phosphate | 70 |
| | Citric acid | 5 |
| | Calcium aluminate layered double hydroxide nitrate | 5 |
| | Polyacrylic acid; 60,000 MW | 10 |
| | Lithium phosphate | 7 |
| | Magnesium fluoride | 3 |

### Example 2

An aqueous liquid including binder composition was prepared in accordance with an embodiment of the present invention. The aqueous liquid includes a predominant amount of water, as well as other ingredients, as shown in Table 2 below:

**Table 2**

| **Formula** | **Ingredient** | **Wt%** |
|---|---|---|
| 4 | Phosphoric acid | 6 |
| | 2-pyrrolidinone | 3 |
| | LEG-1 | 5 |
| | Surfynol 465 | 2 |
| | Tergitol-15-s-7 | 1 |
| | 1,5-pentanediol | 5 |
| | Water | 78 |

### Example 3

The dry particulate compositions (dry cement mixes) of each of Formulas 1 to 3 were separately spread out as a first powder layer in separate build bins. The aqueous liquid of Formula 4 was then applied to each of the individual powder layers using a thermal ink-jet pen manufactured by Hewlett-Packard Company. In each case, a first layer of cement having a predetermined shape was formed. After 5 to 60 seconds of setting, a second particulate blend layer was applied to the first layer of cement. Additional aqueous liquid was then applied to the second powder layer, thereby forming a second layer of cement. This procedure was continued, adding layer upon layer until a desired three-dimensional object was formed. After allowing each of the three-dimensional compositions to set and dry, the multiple layers of cement were removed from the unbound particulate compositions, respectively. The three-dimensional objects formed were each substantially smooth, having surface pores no larger than about 10 microns on average.

It is to be understood that the present invention is not limited to the disclosed embodiments. The invention is intended to cover various modifications and equivalent arrangements included within the scope of the claims. Therefore, it is intended that the invention be limited only by the scope of the following claims, where the claims are to be given the broadest interpretation so as to encompass all such modifications and equivalent arrangements.

## Claims

1. A method for solid free-form fabrication of a three-dimensional object, comprising:
a) depositing a particulate composition including inorganic phosphate particulates in a defined region;
b) ink-jetting an aqueous liquid onto a predetermined area of the particulate composition to form hydrated cement in the predetermined area;
c) hardening the hydrated cement; and
d) repeating steps a) through c) such that multiple layers of the cement are formed that are bound to one another, thereby forming the three dimensional object.

2. A method as in claim 1, further comprising the step of removing a portion of the particulates blend that does not form the hydrated cement.

3. A method as in claim 1, wherein the particulate composition includes polymeric particulates selected from the group consisting of 75% to 100% hydrolyzed polyvinyl alcohol powder, polyacrylamide powder, poly(acrylic acid), poly(acrylamide-co-acrylic acid), poly(vinyl alcohol-co-ethylene), poly(vinyl alcohol-co-vinyl acetate-co-itaconic acid), poly(vinyl pyrrolidone), poly(methylmethacrylate-co-methacrylic acid), soluble starch, methylcellulose, and combinations thereof.

4. A method as in claim 1, wherein the aqueous liquid has a polymer solvated or dispersed therein, said polymer having a weight average molecular weight from 200 Mw to 2000 Mw.

5. A method as in claim 1, wherein the aqueous liquid further includes a colorant.

## Patentansprüche

1. Ein Verfahren zur festen Freiformherstellung eines dreidimensionalen Objekts, das folgende Schritte umfasst:
a) Aufbringen einer Partikelzusammensetzung, die anorganische Phosphatpartikel umfasst, in einer definierten Region;
b) Tintenstrahlen einer wässrigen Flüssigkeit auf einen vorbestimmten Bereich der Partikelzusammensetzung, um in dem vorbestimmten Bereich hydrierten Zement zu bilden;
c) Härten des hydrierten Zements; und
d) Wiederholen der Schritte a) bis c), so dass mehrere Schichten des Zements gebildet werden, die aneinander gebunden sind, wodurch das dreidimensionale Objekt gebildet wird.

2. Ein Verfahren gemäß Anspruch 1, das ferner den Schritt des Beseitigens eines Teils der Partikelmischung, der nicht den hydrierten Zement bildet, umfasst.

3. Ein Verfahren gemäß Anspruch 1, bei dem die Partikelzusammensetzung polymere Partikel umfasst, die aus der Gruppe ausgewählt sind, die zu 75 % bis 100 % aus hydrolysiertem Polyvinylalkoholpulver, Polyacrylamidpulver, Poly(acrylsäure), Poly(acrylamid-Coacryl-säure), Poly(vinylalkohol-Coethylen), Poly(vinylalko-hol-Covinylazetat-Coitaconsäure), Poly(vinylpyrroli-don), Poly(methylmethacrylat-Comethacrylsäure), löslicher Stärke, Methylzellulose und Kombinationen derselben besteht.

4. Ein Verfahren gemäß Anspruch 1, bei dem in der wässrigen Flüssigkeit ein Polymer solvatisiert oder dispergiert ist, wobei das Polymer eine gewichtsgemittelte relative Molekülmasse von 200 Mw bis 2000 Mw aufweist.

5. Ein Verfahren gemäß Anspruch 1, bei dem die wässrige Flüssigkeit ferner ein Farbmittel umfasst.

## Revendications

1. Méthode de fabrication de formes libres solides d'un objet tridimensionnel, comprenant :
a) le dépôt d'une composition particulaire comprenant des particulats de phosphate inorganique dans une région définie ;
b) le jet comme de l'encre d'un liquide aqueux sur une zone prédéterminée de la composition particulaire pour former un ciment hydraté dans la zone prédéterminée ;
c) le durcissement du ciment hydraté ; et
d) la répétition des étapes a) à c) de telle manière que des couches multiples du ciment soient formées, lesquelles sont liées les unes aux autres, formant de cette manière l'objet tridimensionnel.

2. Méthode selon la revendication 1, comprenant en outre l'étape consistant à éliminer une partie du mélange particulaire qui ne forme pas le ciment hydraté.

3. Méthode selon la revendication 1, dans laquelle la composition particulaire comprend des particulats polymères choisis dans le groupe constitué de 75 % à 100 % de polyalcool vinylique hydrolysé en poudre, de polyacrylamide en poudre, de poly(acide acrylique), de poly(acrylamide-co-acide acrylique), de poly(alcool vinylique-co-éthylène), de poly(alcool vinylique-co-acétate de vinyle-co-acide itaconique), de poly(vinyl-pyrrolidone), de poly(méthacrylate de méthyle-co-acide méthacrylique), d'amidon soluble, de méthylcellulose, et de combinaisons de ceux-ci.

4. Méthode selon la revendication 1, dans laquelle le liquide aqueux a un polymère solvaté ou dispersé dedans, ledit polymère ayant un poids moléculaire moyen de 200 à 2000 de PM.

5. Méthode selon la revendication 1, dans laquelle le liquide aqueux comprend en outre un colorant.
